# FASCICULE DE BREVET EUROPEEN

(11) **EP 2 522 869 B1**
(45) Date de publication et mention de la délivrance du brevet: **31.12.2014**
(21) Numéro de dépôt: 12167329.7
(22) Date de dépôt: 09.05.2012
(51) Int. Cl.: F16C 32/04, G01D 11/24, F16C 39/06

(54) **Palier magnétique actif chemisé resistant a la corrosion**
Korrosionsgeschütztes ausgebuchstes aktives Magnetlager
Corrosion-resistant jacketed active magnetic bearing

(30) Priorité: 13.05.2011 FR 1154176
(43) Date de publication de la demande: 14.11.2012
(73) Titulaire: SKF MAGNETIC MECHATRONICS, 27950 Saint-Marcel (FR)
(72) Inventeur: Moulin, David, 92120 Montrouge (FR); Dupuis, Yves, 27950 SAINT JUST (FR)
(74) Mandataire: David, Alain

(56) Documents cités:
- EP-A1- 1 830 081
- EP-A2- 1 967 286
- FR-A1- 2 632 354
- US-A1- 2003 107 283

## Description

La présente invention concerne un palier magnétique actif pour machine tournante équipée d'un rotor en contact avec un gaz de procédé, le palier magnétique comprenant une armature de palier en matériau magnétique feuilleté solidaire du rotor, un stator de palier composé d'enroulements d'électro-aimants associés à une culasse en matériau magnétique feuilleté qui présente des pièces polaires d'extrémité disposées à faible distance de ladite armature de palier, mais sans contact avec celle-ci, au moins un détecteur de position comprenant une armature de détecteur en matériau magnétique feuilleté montée sur le rotor et un stator de détecteur comprenant des enroulements d'électro-aimants associés à une culasse en matériau magnétique feuilleté, et des circuits électroniques de commande reliés auxdits enroulements d'électro-aimants de palier et auxdits enroulements d'électro-aimants de détecteur.

Les applications des paliers magnétiques dans les machines tournantes se sont développées considérablement ces dernières années du fait de l'énorme avantage que procure leur fonctionnement directement dans le gaz de procédé de la machine considérée, sans étanchéité. Ainsi, et de façon non limitative, on trouve des paliers magnétiques sur les turboexpanders, sur les compresseurs frigorifiques, sur les moteurs électriques d'entraînement de compresseur, etc.

Dans les applications courantes, les circuits magnétiques sont tous à base de fer-silicium. Les tôles magnétiques formant le matériau magnétique feuilleté de ces circuits ont ainsi l'avantage de présenter des caractéristiques magnétiques bien définies et garanties par leur fournisseur, notamment un cycle d'hystérésis limité caractérisé par son champ coercitif et son induction rémanente, ainsi qu'une perméabilité magnétique et une saturation élevée.

Cependant, pour les applications plus particulières notamment de traitement du gaz naturel et pour des applications dans un milieu acide, porteur de particules ou corrosif tels que H2S ou CO2 humides, l'emploi de ces tôles magnétiques s'avère impossible du fait de leur incompatibilité avec un tel environnement. Il en est de même des bobinages statoriques du palier et du détecteur de ces paliers magnétiques actifs du fait de leur défaut d'étanchéité vis-à-vis de l'ambiance.

C'est pourquoi, dans son brevet EP1 830 081, la demanderesse a proposé des paliers magnétiques actifs dont le stator du palier est protégé par une chemise en acier inoxydable martensitique à durcissement par précipitation et celui du détecteur par une chemise en acier inoxydable austénitique et dont le matériau magnétique feuilleté du rotor est aussi en acier inoxydable martensitique à durcissement par précipitation.

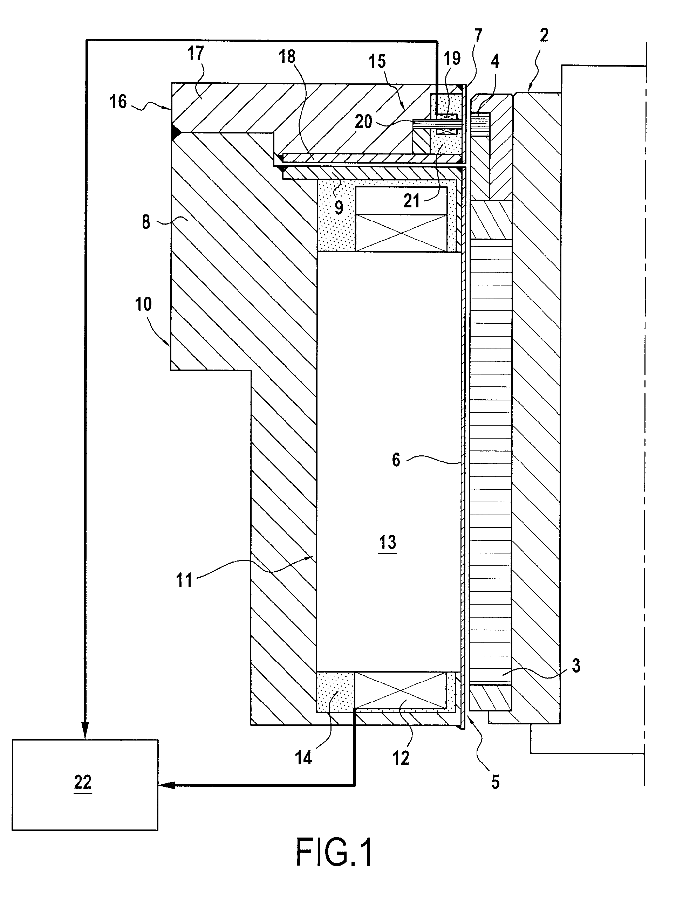

La figure 1 montre un exemple d'un palier magnétique actif radial d'un compresseur tel que décrit dans le brevet précité. On voit un rotor 2 de machine tournante qui est conçu pour être en contact avec un gaz de procédé, qui peut être acide, corrosif ou porteur de particules.

Une armature de palier 3 en matériau magnétique feuilleté est rapportée sur le rotor 2. Cette armature 3 est réalisée en acier inoxydable martensitique à durcissement par précipitation 17-4 PH.

Une armature de détecteur 4, également en acier inoxydable martensitique à durcissement par précipitation 17-4 PH, est rapportée sur le rotor 2, au voisinage de l'armature de palier 3.

Un entrefer 5 présentant une épaisseur par exemple comprise entre 0,3 et 0,5 mm est ménagé entre d'une part la partie périphérique du rotor 2 équipée de l'armature de palier 3 et l'armature de détecteur 4 et d'autre part une première chemise 6 constituant une chemise de palier et une deuxième chemise 7 constituant une chemise de détecteur.

La première chemise 6 est soudée de façon étanche sur des pièces 8, 9 constituant avec cette première chemise un boîtier étanche 10 dans lequel sont disposés les éléments constituant le stator du palier magnétique 11, à savoir des enroulements d'électro-aimants 12 associés à une culasse 13 en matériau magnétique feuilleté fer-silicium. La première chemise 6 est réalisée en acier inoxydable martensitique à durcissement par précipitation 17-4 PH.

Un produit de surmoulage 14 est introduit à l'intérieur du boîtier de palier pour remplir totalement les espaces libres ménagés autour des enroulements 12 d'électro-aimants de palier et ainsi augmenter la tenue mécanique.

Un détecteur de position de type électromagnétique 15 comprend un stator qui est disposé dans un second boîtier 16 distinct du premier boîtier 10 et fermé par la deuxième chemise 7 qui est soudée de façon étanche sur des pièces 17, 18 du second boîtier. Le stator du détecteur de position comprend des enroulements d'électro-aimants 19 associés à une culasse 20 en matériau magnétique feuilleté fer-silicium.

La deuxième chemise 7 est réalisée en acier inoxydable austénitique du type AISI 304, 304L, 316 ou 316L.

Comme dans le cas du stator de palier, un produit de surmoulage 21 est introduit à l'intérieur du boîtier de détecteur 16 pour remplir les espaces libres et augmenter la tenue mécanique.

De préférence, le premier boîtier étanche 10 contenant le stator de palier et le deuxième boîtier étanche 16 contenant le stator de détecteur sont reliés entre eux de façon étanche dans une zone éloignée des première et deuxième chemises 6, 7.

Les enroulements d'électro-aimants 12, 19 du palier et du détecteur sont reliés à des circuits électroniques de commande 22 qui, comme illustrés, peuvent être placés à l'extérieur des boîtiers du palier.

Les chemises ainsi mises en place isolent les circuits magnétiques du stator de l'environnement gazeux, ce qui permet d'utiliser pour ces circuits des tôles magnétiques à base de fer-silicium classiques. Au rotor, l'utilisation de tôles en aciers inoxydables martensitiques à durcissement par précipitation assure directement sans autre protection cette résistance à l'environnement gazeux.

Toutefois, les propriétés magnétiques des aciers inoxydables martensitiques à durcissement par précipitation sont loin d'être idéales, ce qui pénalise les performances du palier magnétique. En effet, sa faible induction de saturation induit une limitation de la capacité de charge statique et dynamique des paliers du fait d'une induction limitée, et implique d'augmenter les longueurs de paliers pour une même capacité de charge et son large cycle d'hystérésis provoque des pertes fers importantes, de l'ordre de 10 fois supérieur à un rotor classique équipé de tôles magnétiques en fer-silicium, induisant un échauffement conséquent et imposant un refroidissement important du palier magnétique.

En outre, dans les environnements dits « Oil and Gas », avec des applications relevant de la norme ANSI/NACE MR0175/IS015156 « *Petroleum and natural gas industries - Materials for use in H2S - containing Environments in oil and gas production* »*,* le recours à des aciers inoxydables martensitiques à durcissement par précipitation impose obligatoirement un traitement thermique des soudures, typiquement par des recuits haute température réalisés entre 500 et 800°C (du type H1150D ou H1150M), incompatible avec le matériau des enroulements du stator de palier 12 qui classiquement ne peuvent supportés des températures supérieures à 250°C.

Pour assurer cette compatibilité, le brevet US7,847,454 a donc proposé l'utilisation d'une chemise de palier bi-matériaux composée d'une partie centrale magnétique en acier inoxydable martensitique à durcissement par précipitation à laquelle sont fixés de part et d'autre des inserts amagnétiques. Ainsi, en munissant également le boitier d'inserts amagnétiques, il devient possible, une fois ces inserts soudés à la fois sur la chemise et sur le boitier et l'ensemble des soudures ayant subies un recuit à haute température, de placer les enroulements dans le boitier et de souder alors les inserts amagnétiques entre eux, sans recours à un traitement thermique particulier et à une température compatible avec le matériau de ces enroulements, pour assurer l'étanchéité de ce boitier.

Malheureusement, ces opérations de soudure sont longues et complexes et donc coûteuses. Elles sont aussi sources de fuites ou d'anomalies de fabrication importantes, notamment au niveau de la chemise de palier bi-matériaux dont la très faible épaisseur rend la soudure avec les inserts particulièrement difficile.

La présente invention a pour but de remédier aux inconvénients précités et notamment de permettre un fonctionnement dans un environnement « Oil et Gas » tout en conservant le bénéfice du principe des paliers chemisés.

Ces buts sont atteints grâce à un palier magnétique actif chemisé pour machine tournante équipée d'un rotor en contact avec un gaz de procédé, le palier magnétique comprenant une armature de palier en matériau magnétique feuilleté solidaire du rotor, un stator de palier composé d'enroulements d'électro-aimants associés à une culasse en matériau magnétique feuilleté qui présente des pièces polaires d'extrémité disposées à faible distance de ladite armature de palier, mais sans contact avec celle-ci, au moins un détecteur de position comprenant une armature de détecteur en matériau magnétique feuilleté montée sur le rotor et un stator de détecteur comprenant des enroulements d'électro-aimants associés à une culasse en matériau magnétique feuilleté, et des circuits électroniques de commande reliés auxdits enroulements d'électro-aimants de palier et auxdits enroulements d'électro-aimants de détecteur,
ledit stator de palier étant protégé par une première chemise en matériau anti-corrosion magnétique qui forme avec des premières parties de boitier un premier boitier étanche enfermant ledit stator de palier et ledit stator de détecteur étant protégé par une seconde chemise en matériau anti-corrosion non magnétique qui forme avec des secondes parties de boitier un second boitier étanche enfermant ledit stator de détecteur,
caractérisé en ce que ladite première chemise est réalisée en un acier inoxydable ferritique et en ce que lesdites premières parties de boitier comportent des pièces d'insert réalisées également en acier inoxydable ferritique et reliées par des soudures, préalablement à la mise en place desdits enroulements d'électro-aimants et de ladite culasse de stator de palier, à une partie de fond de boitier réalisée en un matériau anti-corrosion magnétique, et en ce que ledit matériau magnétique feuilleté formant lesdites armatures de palier et de détecteur est un acier inoxydable ferritique.

Ainsi, l'utilisation au stator de palier d'une chemise en acier inoxydable ferritique permet de conserver un entrefer et des dimensions de palier classiques et il devient possible de mettre en oeuvre des paliers magnétiques actifs dans un environnement « Oil et Gas » de façon simple et peu coûteuse et sans risquer de détruire les enroulements du stator de palier lors des opérations de soudure. Le recours à un acier inoxydable ferritique permet de plus de contrecarrer de nombreux aspects négatifs de l'utilisation des aciers inoxydables martensitiques à durcissement par précipitation utilisés traditionnellement pour ces applications (réductions des pertes fer au rotor, donc de l'échauffement du rotor, optimisation de la capacité de charge du palier, réduction de l'encombrement du système).

Selon un mode de réalisation alternatif, ledit matériau magnétique feuilleté formant lesdites armatures ou lesdites culasses est remplacé par un matériau magnétique massif ou quasi-massif.

De préférence, ledit acier inoxydable ferritique est du type AISI 436, 441, 444 ou 445.

Avantageusement, lesdites soudures reliant ladite première chemise auxdites pièces d'insert sont formées par bombardement électronique, laser ou TIG et sans recuits haute température.

Selon que ladite partie de fond de boitier est réalisée en acier inoxydable ferritique ou en acier inoxydable martensitique à durcissement par précipitation, lesdites pièces d'insert sont soudées sur ladite partie de fond de boitier par bombardement électronique, laser ou TIG et sans recuits haute température ou elles sont fixées sur ladite partie de fond de boitier par des soudures ayant subies un recuit haute température du type H1150D et H1150M.

L'invention est applicable aussi bien à un palier radial qu'à un palier axial ou encore à un palier combinant un palier radial et un palier axial tel qu'un palier de type conique.

L'invention concerne aussi tout turboexpander ou compresseur muni de tels paliers magnétiques actifs.

D'autres caractéristiques et avantages de l'invention ressortiront de la description suivante de modes particuliers de réalisation de l'invention, en référence aux dessins annexés, donnés à titre d'exemples, sur lesquels :
- la Figure 1 est une vue en demi-coupe axiale d'un exemple de palier magnétique actif radial selon l'art antérieur,
- la Figure 2 est une vue en demi-coupe axiale d'un premier exemple de palier magnétique actif radial conformément à la présente invention, et
- la figure 2A est une vue en demi-coupe axiale d'un second exemple de palier magnétique actif radial selon la présente invention.

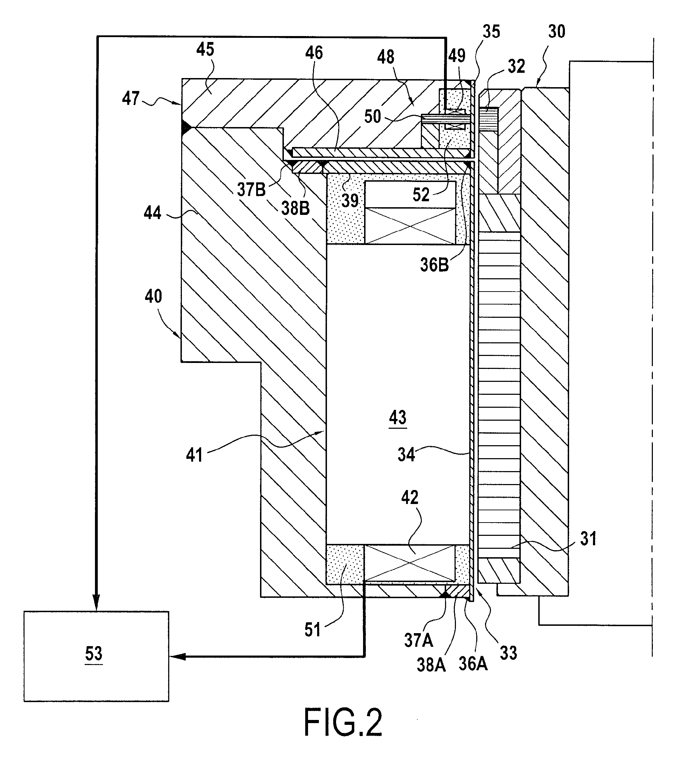

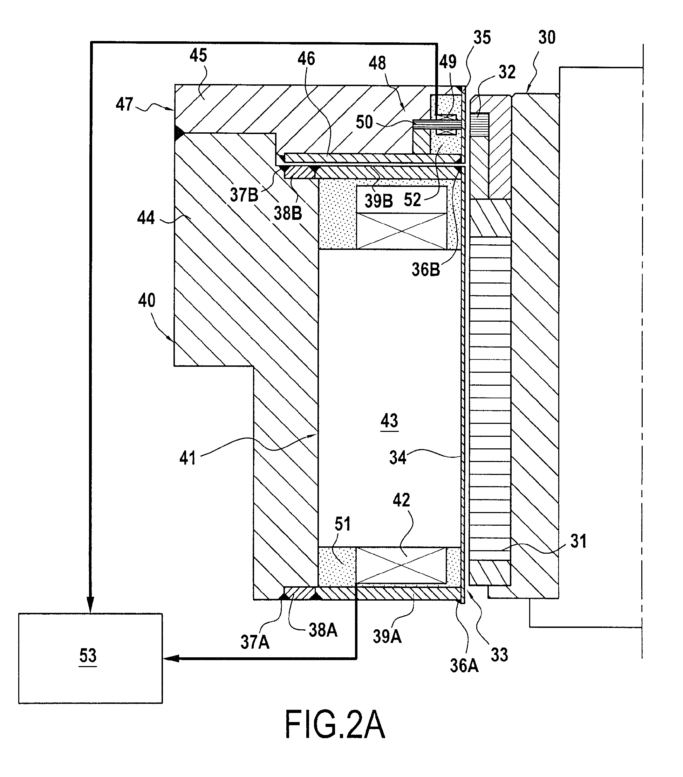

Si l'on se réfère à la Figure 2, on voit un rotor 30 de machine tournante qui est conçu pour être en contact avec un gaz de procédé, qui peut être acide, corrosif ou porteur de particules.

La machine tournante peut être un turboexpander de traitement de gaz naturel ou un compresseur frigorifique par exemple.

Une armature de palier 31 en matériau magnétique feuilleté est rapportée sur le rotor 30. Cette armature 31 est réalisée en un matériau anti-corrosion magnétique tel un acier inoxydable ferritique du type AISI 436, 441, 444 ou 445 qui existe en tôles de faible épaisseur, typiquement de 50µm à 3 mm, et notamment avec une épaisseur de 0,2 mm.

Une armature de détecteur 32, également en matériau magnétique feuilleté, est rapportée sur le rotor 30, au voisinage de l'armature de palier 31. Cette armature 32 est, comme l'armature 31, réalisée en un matériau anti-corrosion magnétique tel un acier inoxydable ferritique du type AISI 436, 441, 444 ou 445.

Un entrefer 33 présentant une épaisseur par exemple comprise entre 0,3 et 1 mm est ménagé entre d'une part la partie périphérique du rotor 30 équipée de l'armature de palier 31 et l'armature de détecteur 32 et d'autre part une première chemise 34 constituant une chemise de stator de palier et une deuxième chemise 35 constituant une chemise de stator de détecteur.

La chemise de stator de palier 34 est réalisée en un matériau anti-corrosion magnétique tel un acier inoxydable ferritique de type AISI 436, 441, 444 ou 445 et présente une épaisseur avantageusement comprise entre 0,1 et 0,8 mm. Elle est soudée de façon étanche par des soudures 36A, 36B sur des pièces d'insert 38A, 39 (constituées d'un matériau compatible avec celui de la chemise ou même de préférence identique à celui-ci) de façon à constituer un premier boîtier étanche 40 dans lequel sont disposés les éléments constituant le stator du palier magnétique 41, à savoir des enroulements d'électro-aimants 42 associés à une culasse 43 en matériau magnétique feuilleté.

Les soudures de la chemise de stator de palier sont réalisées sans recuits haute température, classiquement par bombardement électronique, laser ou TIG et dans une limite de dureté de 250HV, quelle que soit la température ou la concentration en chlorures du gaz de procédé et jusqu'à 10KPa de pression d'H2S.

Préalablement à la mise en place de la culasse 43 et de ses enroulements 42, on aura toutefois pris soin de souder les pièces d'insert 38A, 38B à la partie de boitier 44 destinée à former le fond du boitier étanche 40 et classiquement constitué d'un acier inoxydable martensitique à durcissement par précipitation. Ces soudures 37A, 37B, au contraire des précédentes et conformément à la norme ANSI/NACE MR0175/ISO15156, sont soumises à un traitement thermique du type H1150D ou H1150M comportant un recuit haute température pour relaxer les contraintes résiduelles qu'elles subissent alors. Bien entendu, lorsque cette partie de fond de boitier est elle même réalisée avec un acier inoxydable ferritique du type AISI 436, 441, 444 ou 445, ce recuit n'est évidemment pas nécessaire et les soudures peuvent alors être réalisées à des températures compatibles avec le matériau des enroulements.

On notera que pour permettre le montage de la culasse 43 et de ses enroulements 42, l'un au moins des deux inserts est formé en deux parties 38B, 39 soudées l'une à l'autre par une soudure sans recuits haute température, la seconde partie 39 formant flasque. Sur la figure 2A, il s'agit des deux inserts qui sont chacun formés en deux parties 38A, 39A et 38B, 39B soudées l'une à l'autre sans recuits haute température.

La chemise de stator de détecteur 35 est réalisée classiquement en acier inoxydable austénitique du type AISI 304, 304L, 316 ou 316L et elle est soudée classiquement de façon étanche sur des pièces 45, 46 de façon à former un second boîtier étanche 47 renfermant le stator 48 du détecteur de position comprenant des enroulements d'électro-aimants 49 associés à une culasse 50 en matériau magnétique feuilleté.

Les culasses 43, 50 comportent des pièces polaires d'extrémité qui sont en contact avec leur chemise de stator respective 34, 35 et sont donc disposées à faible distance des armatures 31, 32, mais sans contact avec celles-ci.

Un produit de surmoulage 51, 52 est introduit à l'intérieur des premier 40 et second 47 boîtiers étanches pour remplir les espaces libres ménagés autour des enroulements d'électro-aimants de stator de palier 42 et de détecteur 49 et augmenter ainsi la tenue mécanique. Le produit de surmoulage qui remplit les espaces libres peut être introduit classiquement avec un procédé du type vide et pression de manière à garantir un remplissage total et parfait.

Les enroulements d'électro-aimants de stator de palier 42 et de détecteur 49 sont reliés à des circuits de commande électroniques 53 qui peuvent être placés à l'extérieur des boitiers étanches 40, 47 qui peuvent eux-mêmes être raccordés de façon étanche au reste du carter constituant une enceinte étanche entourant le rotor 30 en contact avec le gaz de procédé.

Ainsi, avec l'utilisation selon l'invention d'une chemise de stator en acier inoxydable ferritique et de pièces d'insert réalisées dans le même matériau et soudées préalablement au boitier de stator, il devient possible de mettre en oeuvre des paliers magnétiques actifs dans un environnement « Oil et Gas » de façon simple et donc peu coûteuse. En outre, l'acier inoxydable ferritique étant compatible sans protection particulière avec des environnements corrosifs, on peut aussi l'utiliser au circuit magnétique des rotors de détecteurs de position sous forme d'empilement de tôles isolées électriquement les unes des autres et au circuit magnétique des rotors de palier sous forme d'empilement de tôles isolées électriquement les unes des autres.

Les caractéristiques tant mécaniques que magnétiques des aciers inoxydables ferritiques sont bien meilleures que celles des aciers inoxydables martensitique à durcissement par précipitation de l'art antérieur car :
- Leur cycle d'hystérésis magnétique est étroit et permet de limiter les pertes dans la partie rotorique du palier, permettant un meilleur rendement de la machine ainsi qu'un refroidissement de la machine moins critique. Il permet notamment de réaliser les essais de la machine à pression ambiante, contrairement à une machine réalisée à partir de tôles en aciers inoxydables martensitique à durcissement par précipitation qui nécessite une ambiance pressurisée pour évacuer les pertes rotoriques. Ainsi, lorsque l'on module l'induction jusqu'à 1.1T, le champ coercitif d'une tôle en acier inoxydable ferritique de type AISI 444 est mesurée inférieur à 1500 A/m, alors qu'un acier inoxydable martensitique à durcissement par précipitation comme le 17-4PH possède un champ coercitif élevé, supérieur à 5000 A/m.
- L'induction à saturation élevée et la perméabilité magnétique importante permettent de conserver une capacité de charge statique et dynamique proche d'un palier classique en fer-silicium, dans un encombrement comparable à des paliers magnétiques classiques. Ainsi, la saturation d'une tôle inoxydable ferritique du type précitée est mesurée supérieure à 1.4T, alors qu'un acier inoxydable martensitique à durcissement par précipitation possède une saturation plus faible, de l'ordre de 1.1 T. L'excitation magnétique à 1.1 T est mesurée de l'ordre 1000 A/m pour le fer-silicium, 5000 A/m pour l'acier inoxydable ferritique AISI 444, et à 20 000 A/m pour l'acier inoxydable martensitique à durcissement par précipitation de type 17-4 PH.
- La résistivité électrique élevée permet aussi de limiter les pertes fer, et donc de limiter l'échauffement de la machine et de faciliter le contrôle de la température de la machine. Une résistivité 10 fois plus élevée que les aciers inoxydables martensitiques à durcissement par précipitation est caractéristique des aciers inoxydables ferritiques (de l'ordre de 0.8 Ω mm²/m pour l'acier inoxydable ferritique AISI 444, de 0.07 Ω mm²/m pour les aciers inoxydables martensitiques à durcissement par précipitation, et 0.04 Ω mm²/m pour les fer-silicium).

Ainsi, l'utilisation de ce type de matériaux permet de réaliser un système de paliers pouvant être utilisé dans une ambiance corrosive, en présence notamment d'H2S humide et de CO2 humide, suivant la norme ANSI/NACE MR0175/ISO 15156, tout en conservant des performances très proches d'une technologie conventionnelle utilisant des tôles magnétiques fer-silicium et des dimensions identiques aux paliers conventionnels en fer-silicium. De plus, l'homogénéité des propriétés magnétiques, induite par une structure cristallographique plus simple, permet de réduire très fortement les variations générées au rotor et qui dégradent la qualité de détection de sa position et donc la qualité de son asservissement.

La description qui précède a été décrite en référence à un palier magnétique de type radial, mais s'applique bien entendu de la même manière à un palier magnétique de type axial ou à un palier magnétique de type conique combinant les fonctions de palier radial et de palier axial.

De la même façon, s'il a été fait référence à l'emploi de matériaux magnétiques feuilletés pour la réalisation des armatures 31, 32 et des culasses 43, 50, il est bien entendu que ces armatures ou éventuellement ces culasses peuvent être réalisées également avec l'acier inoxydable ferritique de type AISI 436, 441, 444 ou 445 sous une forme massive ou quasi-massive, c'est-à-dire sans isolation électrique entre les tôles magnétiques les constituant.

## Revendications

1. Palier magnétique actif chemisé pour machine tournante équipée d'un rotor (30) en contact avec un gaz de procédé, le palier magnétique comprenant une armature de palier (31) en matériau magnétique feuilleté solidaire dudit rotor, un stator de palier (41) composé d'enroulements d'électro-aimants (42) associés à une culasse (43) en matériau magnétique feuilleté qui présente des pièces polaires d'extrémité disposées à faible distance de ladite armature de palier (31), mais sans contact avec celle-ci, au moins un détecteur de position comprenant une armature de détecteur (32) en matériau magnétique feuilleté montée sur le rotor (30) et un stator de détecteur (48) comprenant des enroulements d'électro-aimants (49) associés à une culasse (50) en matériau magnétique feuilleté, et des circuits électroniques de commande (53) reliés auxdits enroulements d'électro-aimants (42) de palier et auxdits enroulements d'électro-aimants (49) de détecteur,
ledit stator de palier étant protégé par une première chemise (34) en matériau anti-corrosion magnétique qui forme avec des premières parties de boitier (38A, 38B, 39, 39A, 39B, 44) un premier boitier étanche (40) enfermant ledit stator de palier et ledit stator de détecteur étant protégé par une seconde chemise (35) en matériau anti-corrosion non magnétique qui forme avec des secondes parties de boitier (45, 46) un second boitier étanche (47) enfermant ledit stator de détecteur,
**caractérisé en ce que** ladite première chemise est réalisée en un acier inoxydable ferritique et **en ce que** lesdites premières parties de boitier comportent des pièces d'insert (38A, 38B, 39, 39A, 39B) réalisées également en acier inoxydable ferritique et reliées par des premières soudures (36A, 36B) à ladite première chemise, lesdites pièces d'inserts étant également reliées par des secondes soudures (37A, 37B), préalablement à la mise en place desdits enroulements d'électro-aimants et de ladite culasse de stator de palier, à une partie de fond de boitier (44) réalisée en un matériau anti-corrosion magnétique, et **en ce que** ledit matériau magnétique feuilleté formant lesdites armatures de palier et de détecteur est un acier inoxydable ferritique.

2. Palier magnétique actif chemisé pour machine tournante équipée d'un rotor (30) en contact avec un gaz de procédé, le palier magnétique comprenant une armature de palier (31) en matériau magnétique massif ou quasi-massif solidaire dudit rotor, un stator de palier (41) composé d'enroulements d'électro-aimants (42) associés à une culasse (43) en matériau magnétique massif ou quasi-massif qui présente des pièces polaires d'extrémité disposées à faible distance de ladite armature de palier (31), mais sans contact avec celle-ci, au moins un détecteur de position comprenant une armature de détecteur (32) en matériau magnétique massif ou quasi-massif montée sur le rotor (30) et un stator de détecteur (48) comprenant des enroulements d'électroaimants (49) associés à une culasse (50) en matériau magnétique massif ou quasi-massif, et des circuits électroniques de commande (53) reliés auxdits enroulements d'électro-aimants (42) de palier et auxdits enroulements d'électro-aimants (49) de détecteur,
ledit stator de palier étant protégé par une première chemise (34) en matériau anti-corrosion magnétique qui forme avec des premières parties de boitier (38A, 38B, 39, 39A, 39B, 44) un premier boitier étanche (40) enfermant ledit stator de palier et ledit stator de détecteur étant protégé par une seconde chemise (35) en matériau anti-corrosion non magnétique qui forme avec des secondes parties de boitier (45, 46) un second boitier étanche (47) enfermant ledit stator de détecteur,
**caractérisé en ce que** ladite première chemise est réalisée en un acier inoxydable ferritique et **en ce que** lesdites premières parties de boitier comportent des pièces d'insert (38A, 38B, 39, 39A, 39B) réalisées également en acier inoxydable ferritique et reliées par des premières soudures (36A, 36B) à ladite première chemise, lesdites pièces d'inserts étant également reliées par des secondes soudures (37A, 37B), préalablement à la mise en place desdits enroulements d'électro-aimants et de ladite culasse de stator de palier, à une partie de fond de boitier (44) réalisée en un matériau anti-corrosion magnétique, et **en ce que** ledit matériau magnétique massif ou quasi-massif formant lesdites armatures de palier et de détecteur est un acier inoxydable ferritique.

3. Palier magnétique actif selon la revendication 1 ou la revendication 2, **caractérisé en ce que** ledit acier inoxydable ferritique est du type AISI 436, 441, 444 ou 445.

4. Palier magnétique actif selon la revendication 3, **caractérisé en ce que** lesdites premières soudures reliant ladite première chemise auxdites pièces d'insert sont formées par bombardement électronique, laser ou TIG et sans recuits haute température.

5. Palier magnétique actif selon la revendication 4, **caractérisé en ce que** ladite partie de fond de boitier (44) est réalisée en acier inoxydable ferritique et lesdites pièces d'insert sont soudées sur ladite partie de fond de boitier par bombardement électronique, laser ou TIG et sans recuits haute température.

6. Palier magnétique actif selon la revendication 4, **caractérisé en ce que** ladite partie de fond de boitier (44) est réalisée en acier inoxydable martensitique à durcissement par précipitation et lesdites pièces d'insert sont fixées sur ladite partie de fond de boitier par lesdites secondes soudures ayant subies un recuit haute température du type H1150D et H1150M.

7. Palier magnétique actif selon la revendication 4 ou la revendication 6, **caractérisé en ce que** l'une au moins desdites pièces d'insert est constituée en deux parties soudées sur à l'autre par bombardement électronique, laser ou TIG et sans recuits haute température.

8. Palier magnétique actif selon l'une quelconque des revendications 1 à 7, **caractérisé en ce qu'**il constitue un palier radial.

9. Palier magnétique actif selon l'une quelconque des revendications 1 à 7, **caractérisé en ce qu'**il constitue un palier axial.

10. Turboexpander de traitement de gaz naturel comportant au moins un palier magnétique actif selon l'une quelconque des revendications 1 à 9.

11. Compresseur frigorifique comportant au moins un palier magnétique actif selon l'une quelconque des revendications 1 à 9.

## Patentansprüche

1. Ummanteltes aktives Magnetlager für eine umlaufende Maschine, die mit einem mit einem Verfahrensgas in Kontakt befindlichen Rotor (30) ausgestattet ist, wobei das Magnetlager einen Lageranker (31) aus magnetischem Schichtmaterial, der mit dem Rotor fest verbunden ist, einen Lagerstator (41), bestehend aus Elektromagnetwicklungen (42), die einem Joch (43) aus magnetischem Schichtmaterial zugeordnet sind, das endseitige Polschuhe aufweist, welche in geringem Abstand von dem Lageranker (31), aber ohne Kontakt mit diesem angeordnet sind, wenigstens einen Positionsdetektor, der einen Detektoranker (32) aus magnetischem Schichtmaterial, welcher an dem Rotor (30) angebracht ist, und einen Detektorstator (48) mit Elektromagnetwicklungen (49), die einem Joch (50) aus magnetischem Schichtmaterial zugeordnet sind, umfasst, sowie elektronische Steuerkreise (53), die mit den Elektromagnetwicklungen (42) des Lagers und mit den Elektromagnetwicklungen (49) des Detektors verbunden sind, umfasst,
wobei der Lagerstator durch einen ersten Mantel (34) aus magnetischem Korrosionsschutzmaterial geschützt ist, der mit ersten Gehäuseteilen (38A, 38B, 39, 39A, 39B, 44) ein den Lagerstator umschließendes erstes dichtes Gehäuse (40) bildet, und wobei der Detektorstator durch einen zweiten Mantel (35) aus nicht magnetischem Korrosionsschutzmaterial geschützt ist, der mit zweiten Gehäuseteilen (45, 46) ein den Detektorstator umschließendes zweites dichtes Gehäuse (47) bildet,
**dadurch gekennzeichnet, dass** der erste Mantel aus einem rostfreien ferritischen Stahl gefertigt ist und dass die ersten Gehäuseteile Einsatzstücke (38A, 38B, 39, 39A, 39B) umfassen, die ebenfalls aus rostfreiem ferritischem Stahl gefertigt sind und durch erste Schweißnähte (36A, 36B) mit dem ersten Mantel verbunden sind, wobei die Einsatzstücke auch durch zweite Schweißnähte (37A, 37B), vor dem Anordnen der Elektromagnetwicklungen und des Jochs des Lagerstators, mit einem aus einem magnetischen Korrosionsschutzmaterial gefertigten Gehäusebodenteil (44) verbunden sind, und dass das magnetische Schichtmaterial, das die Anker von Lager und Detektor bildet, ein rostfreier ferritischer Stahl ist.

2. Ummanteltes aktives Magnetlager für eine umlaufende Maschine, die mit einem mit einem Verfahrensgas in Kontakt befindlichen Rotor (30) ausgestattet ist, wobei das Magnetlager einen Lageranker (31) aus massivem oder quasi massivem magnetischem Material, der mit dem Rotor fest verbunden ist, einen Lagerstator (41), bestehend aus Elektromagnetwicklungen (42), die einem Joch (43) aus massivem oder quasi massivem magnetischem Material zugeordnet sind, das endseitige Polschuhe aufweist, welche in geringem Abstand von dem Lageranker (31), aber ohne Kontakt mit diesem angeordnet sind, wenigstens einen Positionsdetektor, der einen Detektoranker (32) aus massivem oder quasi massivem magnetischem Material, welcher an dem Rotor (30) angebracht ist, und einen Detektorstator (48) mit Elektromagnetwicklungen (49), die einem Joch (50) aus massivem oder quasi massivem magnetischem Material zugeordnet sind, umfasst, sowie elektronische Steuerkreise (53), die mit den Elektromagnetwicklungen (42) des Lagers und mit den Elektromagnetwicklungen (49) des Detektors verbunden sind, umfasst,
wobei der Lagerstator durch einen ersten Mantel (34) aus magnetischem Korrosionsschutzmaterial geschützt ist, der mit ersten Gehäuseteilen (38A, 38B, 39, 39A, 39B, 44) ein den Lagerstator umschließendes erstes dichtes Gehäuse (40) bildet, und wobei der Detektorstator durch einen zweiten Mantel (35) aus nicht magnetischem Korrosionsschutzmaterial geschützt ist, der mit zweiten Gehäuseteilen (45, 46) ein den Detektorstator umschließendes zweites dichtes Gehäuse (47) bildet,
**dadurch gekennzeichnet, dass** der erste Mantel aus einem rostfreien ferritischen Stahl gefertigt ist und dass die ersten Gehäuseteile Einsatzstücke (38A, 38B, 39, 39A, 39B) umfassen, die ebenfalls aus rostfreiem ferritischem Stahl gefertigt sind und durch erste Schweißnähte (36A, 36B) mit dem ersten Mantel verbunden sind, wobei die Einsatzstücke auch durch zweite Schweißnähte (37A, 37B), vor dem Anordnen der Elektromagnetwicklungen und des Jochs des Lagerstators, mit einem aus einem magnetischen Korrosionsschutzmaterial gefertigten Gehäusebodenteil (44) verbunden sind, und dass das massive oder quasi massive magnetische Material, das die Anker von Lager und Detektor bildet, ein rostfreier ferritischer Stahl ist.

3. Aktives Magnetlager nach Anspruch 1 oder Anspruch 2, **dadurch gekennzeichnet, dass** der rostfreie ferritische Stahl vom Typ AISI 436, 441, 444 oder 445 ist.

4. Aktives Magnetlager nach Anspruch 3, **dadurch gekennzeichnet, dass** die ersten Schweißnähte, welche den ersten Mantel mit den Einsatzstücken verbinden, durch Elektronenbeschuss, Laser oder WIG und ohne Hochtemperaturglühen gebildet sind.

5. Aktives Magnetlager nach Anspruch 4, **dadurch gekennzeichnet, dass** das Gehäusebodenteil (44) aus rostfreiem ferritischem Stahl gefertigt ist und die Einsatzstücke durch Elektronenbeschuss, Laser oder WIG und ohne Hochtemperaturglühen auf das Gehäusebodenteil geschweißt sind.

6. Aktives Magnetlager nach Anspruch 4, **dadurch gekennzeichnet, dass** das Gehäusebodenteil (44) aus rostfreiem martensitischem Stahl mit Ausscheidungshärtung gefertigt ist und die Einsatzstücke durch die zweiten Schweißnähte, die einem Hochtemperaturglühen vom Typ H1150D und H1150M unterzogen wurden, an dem Gehäusebodenteil befestigt sind.

7. Aktives Magnetlager nach Anspruch 4 oder Anspruch 6, **dadurch gekennzeichnet, dass** wenigstens eines der Einsatzstücke aus zwei Teilen, die durch Elektronenbeschuss, Laser oder WIG und ohne Hochtemperaturglühen aneinander geschweißt sind, gebildet ist.

8. Aktives Magnetlager nach einem der Ansprüche 1 bis 7, **dadurch gekennzeichnet, dass** es ein Radiallager bildet.

9. Aktives Magnetlager nach einem der Ansprüche 1 bis 7, **dadurch gekennzeichnet, dass** es ein Axiallager bildet.

10. Turboexpander zur Erdgasbehandlung, der wenigstens ein aktives Magnetlager nach einem der Ansprüche 1 bis 9 umfasst.

11. Kältemaschinen-Kompressor, der wenigstens ein aktives Magnetlager nach einem der Ansprüche 1 bis 9 umfasst.

## Claims

1. Jacketed active magnetic bearing for a rotary machine having a rotor (30) in contact with a process gas, the magnetic bearing comprising a bearing armature (31) of laminated magnetic material secured to said rotor, a bearing stator (41) made up of electromagnet windings (42) associated with a yoke (43) of laminated magnetic material that presents end pole pieces disposed at a short distance from said bearing armature (31) but without making contact therewith, at least one position detector comprising a detector armature (32) of laminated magnetic material mounted on the rotor (30) and a detector stator (48) comprising electromagnet windings (49) associated with a yoke (50) of laminated magnetic material, and electronic control circuits (53) connected to said bearing stator electromagnet windings (42) and to said detector stator electromagnet windings (49);
said bearing stator being protected by a first jacket (34) of magnetic anti-corrosion material that co-operates with first housing portions (38A, 38B, 39, 39A, 39B, 44) to form a first leaktight housing (40) enclosing said bearing stator, and said detector stator being protected by a second jacket (35) of non-magnetic anti-corrosion material that co-operates with second housing portions (45, 46) to form a second leaktight housing (47) enclosing said detector stator;
**characterized in that** said first jacket is made of a ferritic stainless steel, and **in that** said first housing portions have insert parts (38A, 38B, 39, 39A, 39B) that are also made of ferritic stainless steel, and that are connected by first welds (36A, 36B) to said first jacket, said insert parts also being connected by second welds (37A, 37B), before said electromagnet windings and said bearing stator yoke are put into place, to a housing end-wall portion (44) made of a magnetic anti-corrosion material, and **in that** said laminated magnetic material forming said bearing armature and said detector armature is a ferritic stainless steel.

2. Jacketed active magnetic bearing for a rotary machine having a rotor (30) in contact with a process gas, the magnetic bearing comprising a bearing armature (31) of solid or quasi-solid magnetic material secured to said rotor, a bearing stator (41) made up of electromagnet windings (42) associated with a yoke (43) of solid or quasi-solid magnetic material that presents end pole pieces disposed at a short distance from said bearing armature (31) but without making contact therewith, at least one position detector comprising a detector armature (32) of solid or quasi-solid magnetic material mounted on the rotor (30) and a detector stator (48) comprising electromagnet windings (49) associated with a yoke (50) of solid or quasi-solid magnetic material, and electronic control circuits (53) connected to said bearing stator electromagnet windings (42) and to said detector stator electromagnet windings (49);
said bearing stator being protected by a first jacket (34) of magnetic anti-corrosion material that co-operates with first housing portions (38A, 38B, 39, 39A, 39B, 44) to form a first leaktight housing (40) enclosing said bearing stator, and said detector stator being protected by a second jacket (35) of non-magnetic anti-corrosion material that co-operates with second housing portions (45, 46) to form a second leaktight housing (47) enclosing said detector stator;
**characterized in that** said first jacket is made of a ferritic stainless steel, and **in that** said first housing portions have insert parts (38A, 38B, 39, 39A, 39B) that are also made of ferritic stainless steel, and that are connected by first welds (36A, 36B) to said first jacket, said insert parts also being connected by second welds (37A, 37B), before said electromagnet windings and said bearing stator yoke are put into place, to a housing end-wall portion (44) made of a magnetic anti-corrosion material, and wherein said solid or quasi-solid magnetic material forming said bearing armature and said detector armature is a ferritic stainless steel.

3. Active magnetic bearing according to claim 1 or claim 2, **characterized in that** said ferritic stainless steel is of the AISI 436, 441, 444, or 445 type.

4. Active magnetic bearing according to claim 3, **characterized in that** said first welds connecting said first jacket to said insert parts are formed by electron bombardment welding, laser welding, or TIG welding, and without high-temperature annealing.

5. Active magnetic bearing according to claim 4, **characterized in that** said housing end-wall portion (44) is made of ferritic stainless steel, and said insert parts are welded to said housing end-wall portion by electron bombardment welding, laser welding, or TIG welding, and without high-temperature annealing.

6. Active magnetic bearing according to claim 4, **characterized in that** said housing end-wall portion (44) is made of precipitation hardening martensitic stainless steel, and said insert parts are fastened to said housing end-wall portion by said second welds that have been subjected to high-temperature annealing of the H1150D and Hl150M type.

7. Active magnetic bearing according to claim 4, **characterized in that** at least one of said insert parts is made up of two portions welded together by electron bombardment welding, laser welding, or TIG welding, and without high-temperature annealing.

8. Active magnetic bearing according to any one of claims 1 to 7 or claim 2, **characterized in that** it constitutes a radial bearing.

9. Active magnetic bearing according to any one of claims 1 to 7 or claim 2, **characterized in that** it constitutes an axial bearing.

10. Turboexpander for processing natural gas including at least one active magnetic bearing according to any one of claims 1 to 9.

11. Refrigerator compressor including at least one active magnetic bearing according to any one of claims 1 to 9.
